(19) Europäisches Patentamt
European Patent Office
Office européen des brevets

(11) Publication number: **0 108 630**
**B1**

(12) # EUROPEAN PATENT SPECIFICATION

(45) Date of publication of patent specification: **23.12.87**

(21) Application number: **83306746.5**

(22) Date of filing: **04.11.83**

(51) Int. Cl.⁴: **C 09 J 3/14,** C 08 F 220/00, C 08 F 299/06

(54) **Radiation-curable adhesive compositions.**

(30) Priority: **05.11.82 GB 8231737**

(43) Date of publication of application: **16.05.84 Bulletin 84/20**

(45) Publication of the grant of the patent: **23.12.87 Bulletin 87/52**

(84) Designated Contracting States: **AT BE CH DE FR GB IT LI LU NL SE**

(56) References cited: **EP-A-0 010 355**

(73) Proprietor: **DELTAGLASS S.A.**
**4 Route de Beaumont**
**CH-1700 Fribourg (CH)**

(72) Inventor: **Chevreux, Pierre**
**Residence Prenepla Ornex**
**F-01210 Ferney-Voltaire (FR)**
Inventor: **Chevreux, Christiane A.R.**
**Residence Prenepla Ornex**
**F-01210 Ferney-Voltaire (FR)**

(74) Representative: **Cropp, John Anthony David et al**
**MATHYS & SQUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 108 630 B1

## Description

This invention relates to radiation-curable compositions suitable for use as adhesives for bonding glass, and in particular for the manufacture of clear glass laminates.

There have been many proposals in the literature for such compositions. In general they comprise a viscous or solid radiation-curable ethylenically unsaturated macromolecular or resinous, e.g. oligomer or polymer component dissolved or dispersed in a liquid diluent comprising one or more ethylenically unsaturated monomers which are capable of copolymerising with the said component.

To be commercially acceptable as an adhesive for bonding glass in large scale manufacturing operations such as the manufacture of laminated glass products, the compositions must not only bond adequately in the cured state to the glass and to the other substrate, which may or may not be glass, but must also have an adequate shelf life and yet be able to be cured rapidly when exposed to the chosen irradiation, and must be available in a form having a viscosity sufficiently low in the uncured state to permit its facile application to a substrate in a thin and uniform layer without the need for sophisticated equipment.

For the production of laminated glass products intended to be used as windows or doors or in vehicles, the cured product from the composition must also be clear, colourless and transparent, preferably have a refractive index at least close to that of glass, exhibit adequate water- or moisture-resistance and be resistant to aging in sunlight. Further, since for many intended end uses it is desirable that at least one of the layers of the laminate is an organic glass such as methacrylate or polycarbonate or that a plastics foil such as of vinyl chloride polymer be provided between two glass sheets (one or both of which may be of organic glass), it is also desirable for the composition to bond well to certain plastics materials, especially those that are available as transparent sheets or film.

Much effort has been expended over the last 10—15 years in developing suitable compositions and a very wide variety of resinous components and diluent compositions has been proposed in the literature. One group of resins that has attracted particular interest comprises those which contain urethane groups in an oligomer or polymer chain and particular examples of these are the compounds obtainable by reacting a polyol with a polyisocyanate to form a urethane intermediate having terminal hydroxy and/or isocyanate groups and reacting the intermediate with an α,β-ethylenically unsaturated compound having a group which is reactive with a hydroxy or isocyanate group as appropriate. Where the unsaturated compound contains a carboxylic group attached to a carbon atom of the αβ-ethylenically unsaturated group, i.e., contains the group

$$CH_2=\dot{C}—COO—$$

the product, which will usually be oligomeric, is called, for ease of reference, a urethane acrylate.

One class of composition that has shown particular promise as an adhesive for glass contains a urethane acrylate as the resinous component and a reactive diluent such as acrylic acid, e.g. as described in European patent publication 10355. However, an improvement in the bond obtained between glass and plastics materials, especially vinyl chloride polymers, using the composition would be desirable. In the production of glass laminates, two properties of the bond which are important are the adhesive or bond strength, e.g. as measured in a Peel Test, and the performance of the bond under impact. The latter can be gauged from the performance of the bond in the Peel Test. If the force required when performing the Peel Test at a steady parting rate of e.g. 30 cm/minute is not uniform and/or if it drops markedly if the parting rate is increased sharply, e.g. as when the components are pulled apart sharply by hand, the bond is said to exhibit "dryness" and is less likely to perform well under impact; in particular, delamination and/or splintering of the glass may occur. It is in these properties of bond strength and dryness in particular where improvement is desired; i.e. an increase in bond strength and/or a reduction in "dryness" which can alternatively be described as an increase in the "softness" of the bond. Of course, such improvement should be obtained without unacceptable deterioration of other properties, particularly clarity, colour, reactivity, water-resistance and resistance to ultra-violet light. To improve the bond, without significant loss of water-resistance in particular, however, presents a problem because these properties conflict. Adhesion to glass requires a degree of hydrophilicity whereas hydrophobicity is required for water resistance.

According to the present invention, we have found that an improvement in one or both of the above properties of the bond is obtained if the diluent also includes a limited amount of a mono acrylate of specified kind. USP 3862021 describes a polymerisable composition comprising a polymeric component in a monomeric diluent comprising a first component which may be acrylic acid and a second component which may be a monoester of acrylic acid. However, the polymeric component is not a urethane acrylate and moreover the publication teaches that the use of the first component in amounts exceeding 30% by weight of the mixture of first and second components should be avoided.

In accordance with the present invention, there is provided a radiation-curable fluid adhesive composition for the production of clear glass laminate and of the kind comprising (a) a urethane acrylate component in (b) a liquid α,β-ethylenically unsaturated diluent component comprising acrylic acid and a

monoester of acrylic acid, said composition also optionally containing (c) a photoinitiator, characterised in that said urethane acrylate component comprises at least one urethane acrylate of the kind obtainable by reaction of an oligomeric urethane intermediate having end groups selected from —OH and —NCO with an αβ-ethylenically unsaturated compound which has a group reactive with an end group of the intermediate and also a carboxy (—COO) group attached to a carbon atom which is attached to a methylene group by a double bond, said urethane acrylate component is formed at least mainly of material having a molecular weight ($M_N$) above 1500, and said urethane acrylate component forms from 45% to 75% by weight of the composition, and said diluent component comprises (i) acrylic acid, (ii) an effective amount of at least one acrylate selected from monoesters of acrylic acid and alkanols having from 1 to 6 carbon atoms and substituted derivatives of such alkanols, wherein each substituent contains only carbon, hydrogen and oxygen atoms, and, optionally, (iii) a multiacrylate; said component (i) being present in an amount of from 35% to 90% by weight, based on the total weight of components (i) and (ii), said component (ii) being present in an amount of from 10% to 65% by weight, based on the total weight of components (i) and (ii), and said component (iii) forming from 0% to about 40% by weight of the diluent.

By "effective" is meant that the amount improves one or both of the above-mentioned properties of a bond obtained by curing the composition, i.e. an improvement in bond strength and/or a reduction in "dryness".

The acrylate component of the diluent is an acrylate of an alkanol having 1 to 6 carbon atoms or a substituted derivative of such an alkanol, which substituent contains only carbon, hydrogen and oxygen atoms e.g. as in alkyl-, alkoxy-, alkyl-epoxyalkyl and hydroxyalkyl-acrylates. A mixture of such acrylates may also be used.

Examples of suitable acrylates are ethyl acrylate, n-butyl acrylate, glycidyl acrylate, 2-ethoxyethyl acrylate and 2-hydroxyethyl acrylate. Because of the volatility of the lower alkyl acrylates, it is preferred that the alkanol have at least 3 carbon atoms. Alkanols having over 6 carbon atoms, on the other hand, do not appear to give the desired improvement in the bond. Preferably the alkanol will have the structure

$$R—C(R')_2—C(R')_2—OH$$

wherein R is —H, —OH or a monovalent organic group containing atoms selected only from carbon, oxygen and hydrogen, and having not more than 4 atoms in a chain attached to the free valency, and each R' is individually selected from —H and —$CH_3$, or R and R' together may form a divalent group containing atoms selected only from carbon, oxygen and hydrogen, the sum of the carbon and oxygen atoms in said alcohol being from 4 to 7.

n-Butyl acrylate is particularly preferred because compositions can be formed therefrom which have not only good bond strength and low dryness but also excellent water- and ultraviolet resistance and fast cure rates.

The acrylate must form at least 10% by weight of the combined weight of acrylic acid and acrylate, but at concentrations below about 20% to 25% by weight, the improvement is not very great and therefore a preferred range is 20% or 25% to 65%.

As evidenced by detailed experiments carried out with the preferred acrylate, improvements in bond strength are observed as the amount of acrylate employed increases up to about 40 or even 45% by weight, based on the combined weight of acrylate and acrylic acid. Beyond this level the acrylate may have an adverse effect on the bond strength but initially this is more than offset by a reduction in the "dryness" of the bond.

The preferred amount of acrylate may vary with the nature of the acrylate and the nature of the urethane acrylate but in general it is desired that the bond strength of the adhesive is at least 300 g/cm, preferably at least 500 g/cm and most preferably at least 1000 g/cm, and that the bond has a "dryness", determined as described below, of at least "B", and preferably "C" and the most preferred range is about 35% or 40% to about 60 or 65% of acrylate, based on the combined weight of acrylate and acrylic acid in the diluent.

Where the composition is intended for use in the production of transparent laminates, not all of the specified acrylates may be suitable for use with all urethane acrylate compositions; some combinations tend to give rise to a lack of clarity in the cured material. In some cases where turbidity has been observed in the uncured composition, this has disappeared in the cured material but whether a particular combination of urethane acrylate and acrylate is suitable can readily be determined by simple experiment.

The urethane acrylate component may comprise one or a mixture of urethane acrylates. The nature of the urethane acrylate component and its concentration in the composition are important factors in the reactivity of the composition, the adhesive strength of the bond formed therefrom and the flexibility of a film of the cured composition. This last property is important where the composition is to be used to form a laminate from materials having different thermal expansion coefficients and also affects the flexural strength and impact resistance of laminates. Increasing the concentration generally leads to an improvement in reactivity and adhesive strength but also increases the viscosity thereby making the composition less easy to apply. Preferably the urethane acrylate will form about 50 to about 70% by weight of the composition.

The urethane acrylates employed in the composition of the present invention are notionally obtainable

by the reaction of a polyol and a polyisocyanate to form an oligomeric intermediate which has hydroxy or isocyanate end groups, followed by reaction of this intermediate with an αβ-ethylenically unsaturated compound which has the structure

$$CH_2=\overset{|}{C}-COO-$$

and is reactive with an isocyanate group or hydroxy group as appropriate. Usually the polyol will be reacted with excess polyisocyanate to yield an oligomeric intermediate containing free isocyanate groups which are then reacted with an αβ-ethylenically unsaturated compound of the above kind having a group which is reactive with the isocyanate group, e.g. a hydroxyl group. In general, the αβ-ethylenically unsaturated compound will be a hydroxy ester of acrylic acid or αβ-substituted derivative thereof such as methacrylic acid, e.g. a hydroxyalkyl acrylate or methacrylate of which hydroxyethyl and hydroxypropyl acrylates and methacrylates are the most common examples, especially the acrylates. Either the polyisocyanate or, more usually, the polyol, will generally be oligomeric in order to achieve the desired level of molecular weight ($M_N$) in the urethane acrylate. As the bond strength of the adhesive appears to suffer at lower molecular weights, the urethane acrylate component is formed at least mainly of oligomeric material having a molecular weight above 1500, preferably above 2000—3000, e.g. at least 4000. The molecular weight will normally not exceed 10,000, and more usually will not exceed 7000—8000.

The term molecular weight as used herein refers to number average molecular weight ($\bar{M}_N$) expressed in terms of polystyrene equivalent as measured by, for example, Gel Permeation Chromatography (GPC).

The processes most usually employed to produce the urethane acrylates generally yield mixtures of oligomers, and these mixtures may also include in minor amounts monomeric reaction by-products such as the reaction products of the polyisocyanate or the polyol with the αβ-ethylenically unsaturated compound. These mixtures or fractions thereof may be used as such in the compositions of the present invention.

In general it is desired that the urethane acrylate component comprises at least mainly, and preferably largely, material having a functionality, meaning number of αβ-ethylenically unsaturated groups per molecule, of at least about 2. Usually it will be preferred to have on average about two, e.g. from about 1.5 to about 2.5, preferably about 1.7 to about 2.3, such groups per molecule.

The chemical nature of the urethane acrylate component also effects the properties of the composition and particularly the resistance to water and to u.v. irradiation of the adhesive layer obtained from the composition in a laminate. We have found that the better results are obtained where the urethane acrylate is derived at least mainly from polyol which contains ether groups, e.g. as in polyether polyols and polyetherester polyols.

Best results have been obtained where at least the major part of the urethane acrylate component comprises urethane acrylate derived from polyol which is at least mainly polyether polyol e.g. a polymer of ethylene oxide and/or propylene oxide, and which preferably is free or substantially free of ester groups.

The polyisocyanates may be aromatic, e.g. as in phenylene diisocyanates, toluene diisocyanates and bis(isocyanatoaryl)alkanes. However, it is preferred that most and preferably all or substantially all of the isocyanate groups of the polyisocyanate are attached to aliphatic carbon atoms, e.g. as in polymethylene, e.g. hexamethylene diisocyanates, bis(isocyanatomethyl)cyclohexanes, bis(isocyanatocycloalkyl)alkanes e.g. bis(isocyanatocyclohexyl)methanes and isophorone diisocyanate.

It is preferred that all or substantially all of the unsaturation in the urethane acrylate component of the composition is terminal αβ-unsaturation.

It has been observed that an improvement in the "softness" (i.e. reduction in the "dryness") of the bond can be obtained, especially where the amount of acrylic acid exceeds the amount of acrylate in the diluent, if the urethane acrylate comprises a mixture having, preferably as the main component, (a) generally difunctional urethane acrylate material which preferably contains ether groups in the oligomer or polymer chains and which also contains, preferably in a minor amount, (b) urethane acrylate which has a functionality of at least about 3 and a molecular weight $M_N$ above 1200. An increase in bond strength, which can be substantial, is also observed in many cases. Preferably, the molecular weight is at least about 1300, more preferably at least about 1500 and most preferably at least about 2000.

Preferably the main component comprises urethane acrylate containing about two e.g. about 1.7 to about 2.3, preferably about 1.8 to about 2.2 αβ-ethylenically unsaturated groups per molecule, and derived from polyol which is at least mainly and preferably entirely or substantially entirely polyether polyol and is preferably free or substantially free of ester groups.

The polyol material from which component (b) is derived, on the other hand, and which may be one or a mixture of polyols, may be at least mainly polyester polyol; i.e. polyol wherein the oligomer chains comprise repeating ester groups. In fact, very good results are obtained when the polyol is derived from lactone, especially a caprolactone by which is meant a lactone having 7 atoms, including the oxygen atom, in the lactone ring, the free valencies of the ring carbon atoms generally being satisfied by hydrogen atoms although substitution by lower alkyl groups having one to four carbon atoms may also be tolerable.

In both components, the isocyanate groups of the polyisocyanate are preferably at least mainly attached to aliphatic carbon atoms.

Component (b) is effective in even quite small amounts, e.g. when it forms 1% or even less of the total urethane acrylate component. As the amount of this component in the urethane acrylate is raised, the improvement gained appears to continue to increase to a maximum but thereafter commences to decrease. Also, the presence of large amounts appears to have an adverse effect on other properties such as water resistance. It is therefore preferred that component (b) forms no more than a minor amount of the urethane acrylate material. Best overall results are generally obtained when component (b) forms from about 0.5% to about 30%, preferably from about 0.8% to about 20%, more preferably from about 1% to 15% and most preferably from about 3% to about 15% of the urethane acrylate, by weight.

The composition may, if desired, contain other materials in addition to the urethane acrylate, acrylic acid and specified acrylate, and these may be polymerisable or non-polymerisable.

For example, a resinous or polymeric material in addition to the urethane acrylate may also be present. Such material may be unsaturated, e.g. as in αβ-ethylenically unsaturated polyesters, but preferably will be at least substantially saturated e.g. as in epoxy resins, especially those derived from epichlorhydrin and bis-phenols such as bis-phenol A. Such additional resinous material will not normally form more than 50% by weight of the total composition, however.

The inclusion of balsamic resins is particularly preferred as they increase the resistance of the cured compositions to yellowing with age, even at quite low concentrations such as 2.5% by weight of the total composition. Examples of such resins are the high molecular weight alcohols obtained by the hydrogenation of resinic acids and described generically as hydroabietyl alcohols, such as those marketed under the Trade Name "Abitol", and esters such as the triethylene glycol esters and hydrogenated methyl esters of colophony, such as those marketed under the Trade Names "Hercolyn" and "Staybelite". In general sufficient protection is obtained with the use of 5% of the resin and little further benefit is obtained by exceeding 10% although larger amounts may be used if desired.

In accordance with a further aspect of the present invention, therefore, there is provided a radiation curable urethane acrylate composition which includes an age-improving amount of a balsamic resin which is preferably present in an amount of at least 0.5%, e.g. from 1 to 50%, by weight, of the composition.

The diluent may, if desired, also include one or more, αβ-ethylenically unsaturated compounds in addition to the acrylic acid and specified acrylate, e.g. to adjust the viscosity or reactivity of the composition. Particular examples of such additional components are other αβ-ethylenically unsaturated acids e.g. methacrylic acid or α-cyanoacrylic acid; acrylates other than the specified acrylates, e.g. aminoacrylates, monomeric urethane acrylates and esters of acrylic acid with alkanols having 8 or more carbon atoms; methacrylates; multiacrylates and other αβ-ethylenically unsaturated compounds. However, in general it is found that the better overall combinations of properties of the composition, especially in respect of bond strength, water- and u.v.-resistance, and rate of cure, are obtained as the total combined amount of acrylic acid and specified acrylate in the diluent is increased. It is thus preferred that at least about 50% by weight of the αβ-ethylenically unsaturated acid content of the diluent is acrylic acid and that the acrylic acid and specified acrylate together form at least about 50% by weight of the diluent and preferably substantially more.

The presence of multiacrylates (i.e. the di- or higher esters of acrylic acid with polyhydric alcohols such as neopentylglycol diacrylate, trimethylolpropane triacrylate and pentaerythritol tri- and tetra-acrylate), can also be tolerated. However, the bond strength of the composition appears to increase with decrease in the amount of multiacrylate present and while amounts thereof up to 40% by weight of the diluent can be accepted, smaller amounts are preferred e.g. not more than 30% and more preferably not more than 20% of the diluent, by weight.

It has further been found that the inclusion of αβ-ethylenically unsaturated compounds capable of forming salts with acrylic acid e.g. N,N-dialkyl amino alkyl esters, can lead to haziness in the cured product which becomes significant if such a compound is employed in amounts of about 5% by weight or more of the total composition. Preferably, therefore, such compounds are employed in amounts of less than about 5% preferably less than about 2.5% by weight of the composition. Most preferably, the composition is free or substantially free of such compounds.

While the invention is directed to compositions that may be cured by radiation at large, e.g. ionising radiation, particulate or non-particulate and non-ionising radiation, it is particularly concerned with photopolymerisable compositions such as may be cured by exposure to ultra-violet radiation. Such compositions will normally also contain a photoinitiator. Any suitable photoinitiator may be used but where the composition is to be used in the production of clear laminated glass products, the photoinitiator should not introduce discolouration into the composition. Good reactivity, colour, water-resistance and adhesion are obtained using benzophenone but many possible alternatives are suggested in the art. The photoinitiator is preferably employed in an amount of about 0.5 to about 10% by weight of the basic composition, most preferably about 1 to about 5%.

The u.v. irradiation period required to achieve the polymerisation of the adhesive is directly related to the time after which the minimum dose of radiation of proper wavelength has been absorbed by the adhesive layer. It therefore depends on the spectral distribution of the source, the power thereof, the distance thereof from the substrate to be irradiated and the optical transmission of that layer of the substrate which must be penetrated by the light before reaching the adhesive itself. Thus, glass and

synthetic resins all have some significant extinction coefficient in the u.v. range and, consequently, the irradiation duration must be adapted to the optical properties of each material used.

As u.v. irradiation sources, any having an emission spectrum largely comprised above 0.3 μm is convenient, e.g. mercury vapor lamps. One or more lamps of 20 W to about 10 KW can be used, e.g. a 2 kW lamp of type HTQ7 made by Philips or a high-pressure mercury vapor lamp giving 80 W/cm made by Hanovia. Argon or krypton lamps can also be used.

Preferably, the polymerisation is carried out only by irradiation with no further heat than that resulting from the light source. In general, it is not necessary that such heat be removed, e.g. by cooling. In general, cure can be completed within a few seconds.

The thickness of the adhesive layer, expressed in grams per unit surface area, can be between about 5 and about 100 g/m$^2$ or even exceed such limit. Best adhesion results, especially when the laminate is subjected to long exposures to moisture, are obtained when using about 15 to about 60 g/m$^2$ of the adhesive.

To be suitable for use with conventional dispensing and spreading machinery for liquid materials, it is desirable for the compositions to have a viscosity of less than about 2 Pa · s (2000 cp) and preferably in the range about 0.3 to about 1.2 Pa · s (about 300 to about 1200 cp), more preferably about 0.5 to about 1.0 Pa · s (about 500 to about 1000 cp), measured at 20°C on a Brookfield LV viscometer with a No. 1 spindle at 6 rpm.

By means of the invention, it is possible to obtain a u.v.-radiation curable adhesive composition comprising urethane acrylate and an αβ-ethylenically unsaturated diluent therefor, and having a very desirable combination of viscosity in the uncured state, reactivity in terms of time to cure when exposed to a source of u.v.-radiation, and bond strength, water-resistivity, u.v.-resistivity, colour and clarity when cured. In particular, there can be obtained compositions having a viscosity of 1.2 Pa · s (1200 cp) or less, measured using a Brookfield LV viscometer with a No. 1 spindle at 6 rpm at 20°C, and a cure time, as herein defined, of 30 seconds or less, and which cure to a clear and colourless adhesive layer having a bond strength of at least 500 g/cm, a water-resistance of at least 4 and u.v.-resistance of 0, where bond strength, water-resistance and u.v.-resistance are all as defined herein.

In accordance with a further embodiment of the invention, there is provided a method of producing a clear glass laminate which involves bonding a first sheet of glass to second sheet which is selected from glass sheets and clear plastics sheets using an adhesive, and wherein as adhesive there is used the composition in accordance with the present invention and the assembly of sheets with a layer of said adhesive composition therebetween is exposed to irradiation to cure the adhesive and bond the sheets together.

A particularly important feature of the invention is that it enables the replacement of the polyvinylbutyral conventionally employed as an interlayer in safety glass laminates by alternative plastics materials which perform better at elevated temperatures, especially at temperatures of 40°C or more at which polyvinyl butyral tends to lose much of its strength. A particular example is vinyl chloride polymer e.g. polyvinyl chloride.

Thus, in accordance with yet another embodiment of the invention, a method is provided for producing a clear glass laminate in which one face of a clear plastics foil or film interlayer is bonded to a glass sheet and the other face is bonded to a second sheet which is selected from glass sheets and clear plastics sheets, wherein the bonding of at least said glass sheet to said interlayer is effected by means of an adhesive composition in accordance with the present invention and the assembly of glass sheet and interlayer with a layer of said adhesive composition therebetween is exposed to irradiation to cure the adhesive and bond the sheet and interlayer together.

The invention is now illustrated by the following Examples in which all parts are expressed by weight unless otherwise indicated.

In these Examples, water resistance, u.v. resistance, bond strength and cure time were measured as follows:

Water resistance:

An excess of the composition is applied to one face of a 50×25×4 mm glass plate. A second glass plate having the same dimensions is then pressed on the coated surface and the excess adhesive expressed from the edges of the assembly is wiped off. After curing, the assembly is immersed in boiling water for 3 hours. The sample is then withdrawn, dried and examined and the degree by which the adhesive layer has been affected is measured on the scale 0—7 determined as follows:

7 no affect;
6 slightly affected at corners of sample only;
5 very narrow band affected around periphery of sample;
4 affected band not exceeding about 2.5 mm wide around periphery parallel to sides;
3 width of affected areas extending up to 5 mm in from sides of sample;
2 width of affected areas extending up to 8 mm in from sides of sample;
1 seriously affected; only small area in middle of sample left unaffected;
0 whole area of adhesive affected.

The affected area is characterised by the presence of one or more of the following: bubbling and/or blisters, striations and the presence of interference colours.

U.V. resistance:

To each of the two long edges of one face of a 50×25×4 mm glass plate is fixed a 1—2 mm wide spacer strip 1 mm thick. An excess of the composition is disposed between the spacers and a second 50×25×4 mm glass plate is pressed on top. After curing the composition, the whole assembly is exposed to irradiation at 50—65°C from a Hanau 160 watt u.v. lamp placed 25 cm from the sample. The u.v. resistance is estimated from the degree to which the adhesive layer has become discoloured after 63 hours exposure and is recorded on the scale 0—5 where 0 means there has been no observable colour change, 5 means a deep yellow colour has developed and numerals 4 to 1 relate to progressively lighter yellow colours.

Bond strength

was measured by a Peel Test according to ASTM D 1876-69. A 4×40×100 mm glass plate is bonded to a 40×165 mm sample of pvc film, e.g. Storey's Vibak VB 24, using a sample of the composition. The pvc film is then cut to produce a centrally disposed 25 mm wide band and the lateral bands are removed to avoid any edge effects. The central pvc band is then peeled from the glass strip at 180° and a parting speed of 30 cm/minute using an Instron or similar machine. The resistance, measured in g/cm is a measure of the bond strength.

Dryness:

The level of "dryness" of the bond is determined by observing the performance of the bond during the Peel Test referred to above and is classified as either A, B or C. The highest level of "dryness", level A, is where during the Peel Test the components of the laminate part very suddenly and completely when a certain level of parting force is reached. The next level, level A—B, is where the force required to part the components at 30 cm/minute in the Peel Test varies during the test and/or from test to test. A lower level of "dryness", level B, is where the force required for the Peel Test does not vary significantly during the Peel Test and is substantially unchanged over a series of tests but is significantly lower when the components of the laminate are parted sharply by hand. Where there is no significant lowering of the bond strength in the test "dryness" is considered absent, and the bond is said to be "soft" or "supple". This is level C.

Cure time:

Time taken to cure the composition when employed as a layer between the pvc film used in the 'Bond Strength' test and a 3 mm thick sheet of flat glass and irradiated through the glass sheet using a 1 kw u.v. radiation source having a wavelength of approximately 10 cm and spaced 40 cm from the surface of the glass sheet.

All the compositions described in the Examples had a viscosity below about 2 Pa · s (2000 cp), a shelf life of at least several months and could be cured within a few seconds or a minute at the most to colourless, clear and transparent flexible films which bond well to a variety of plastics materials and have a refractive index close or equal to that of glass.

Example 1

Adhesive compositions A, B and C were prepared having the following compositions and tested for bond strength, water resistance and u.v. resistance. The results are shown in Table 1.

| | A (comparative) | B | C |
|---|---|---|---|
| Urethane acrylate | 58.0 | 58.0 | 58.0 |
| Acrylic acid | 38.8 | 29.1 | 19.4 |
| n-butyl acrylate | nil | 9.7 | 19.4 |
| DMAEMA* | 1.6 | 1.6 | 1.6 |
| Benzophenone | 1.6 | 1.6 | 1.6 |

*DMAEMA is N,N-dimethylaminoethyl methacrylate.

The urethane acrylate was a low melting point solid containing 0.4—0.5 eq/kg unsaturation and marketed as Oligomer AJ 17 by SNPE, France. Analysis showed it to contain residues of ethylene glycol, propylene-1,2-glycol, adipic acid, acrylic acid and toluene-2,4-diisocyanate (TDI), and to have a molecular weight $M_N$ of about 5000—5500.

| TABLE 1 | | | |
|---|---|---|---|
| Composition | Bond strength (g/cm) | u.v. resistance | Water resistance |
| A (Comparative) | 400 | 2.5 | 2 |
| B | 1000 | 2 | 3 |
| C | 1300 | 1.5 | 3 |

Example 2

Compositions corresponding to C of Example 1, were prepared but wherein the n-butyl acrylate was replaced by the acrylate identified in the Table below and, as the urethane acrylate, a material was used having a molecular weight of 1500, containing on average 2 αβ-ethylenically unsaturated groups per molecule and available as Ebecryl 210 from UCB, Belgium. On analysis, this material was found to contain residues from poly(oxypropylene)glycol, acrylic acid and TDI. The results were as follows:

| Composition | Acrylate ester | Bond strength (g/cm) | u.v. resistance | Water resistance |
|---|---|---|---|---|
| D | glycidyl acrylate | 180 | 2 | 3 |
| E | 2-ethoxyethyl acrylate | 500 | 4 | 4—5 |
| F | t-butyl acrylate | 100—650 | 4 | 2—3 |
| G (Comparative) | 2-ethylhexyl acrylate | nil | — | — |
| H (Comparative) | dodecyl acrylate | nil | — | — |

The relatively low values recorded for bond strength, as compared with those recorded for Composition C, are believed to be due, at least in part, to the low molecular weight of the urethane acrylate.

Example 3

Compositions J, K and L, corresponding to A, B and C of Example 1 were prepared but using as the urethane acrylate a material having a molecular weight of 5000, and containing on average 2 αβ-ethylenically unsaturated groups per molecule and available as Ebecryl 230 from UCB, Belgium. On analysis, this material was found to contain residues from poly(oxypropylene)glycol, hexamethylene diisocyanate (HMDI) and acrylic acid. The results were as follows:

| Composition | Bond strength (g/cm) | u.v. resistance | Water resistance |
|---|---|---|---|
| J (Comparative) | 140—180 | 0 | 2—3 |
| K | 480 | 0 | 4 |
| L | 650 | 0 | 4—5 |

It will be seen that in this case, where the urethane acrylate is derived from a polyether polyol and an aliphatic diisocyanate, excellent u.v. resistance is observed and the addition of the butyl acrylate improves both water resistance and bond strength.

Example 4

To examine the effect of varying the concentration of the acrylate ester in the diluent, a series of adhesive compositions were prepared from 57 parts of Ebecryl 230, 2.5 parts of benzophenone and 38.5 parts of a diluent comprising acrylic acid and n-butyl acrylate employed in the concentrations shown in the Table below in which the bond strength, bond type and water resistance of the compositions are also recorded.

| Composition | Acrylic acid* | n-butyl acrylate* | Bond strength (g/cm) | Dryness of bond | Water resistance |
|---|---|---|---|---|---|
| M (Comparative) | 0 | 38.5 | negligible | — | 1 |
| N (Comparative) | 9 | 29.5 | ~250 | C | ~3.5 |
| P | 13 | 25.5 | ~450 | B—C | ~4 |
| R | 17 | 21.5 | ~700 | B—C | ~4.5 |
| S | 21 | 17.5 | ~1400 | B | ~5.5 |
| T | 29 | 9.5 | ~650 | A—B | ~3—4 |
| V (Comparative) | 38.5 | 0 | negligible | A | 1.4 |

*(parts by weight)

The viscosity of Composition T was measured as 0.7 Pa · s (700 cp) on a Brookfield LV viscometer with No. 1 spindle at 6 rpm at 20°C. This viscosity was unchanged after four months' storage.

The u.v. resistance of the same composition was found to be 0 on the scale.

Example 5

As a test of the suitability of the compositions in the production of safety laminates, glass/pvc/glass laminates formed using as adhesive layers compositions N, P R and S were subjected within a few hours of preparation to a falling ball test as follows. A 2.06 Kg ball was dropped repeatedly from a height of 3 m on to a face of a 50.6 cm×50.6 cm laminate made using the adhesive and comprising a 0.76 mm film of "Vibak" VB 24 (a pvc film marketed by Storey Brothers of U.K.) between two 4 mm glass sheets.

In each case, it required 6—8 impacts before the ball passed through the laminate and detailed comments are as follows.

| Composition | Comments |
|---|---|
| N | No sign of dryness but a small amount of glass on opposite side from impact falls away on 1st impact. More obvious on second impact. |
| P | As N but less glass falls away. |
| R | Some signs of delamination appear during test and more glass falls away after impact than in P. |
| S | Less satisfactory than R. Delamination appears along line of fracture on 1st impact. |

Example 6

Composition T was modified by the addition of 2 parts of a composition comprising about 65% by weight urethane acrylate oligomer in about 35% by weight low molecular weight material as diluent, and available as Actomer X-117 from Union Carbide Corporation of U.S.A. This material is described as having a theoretical molecular weight of 2020 and a theoretical acrylate functionality of 2.2. By analysis, the oligomeric portion was found to have an $M_N$ of about 3500, to contain residues of caprolactone-derived polyol, isophorone diisocyanate ethylene glycol and acrylic acid and to consist largely of oligomers having at least 3 αβ-ethylenically unsaturated groups per molecule. The low molecular weight material analysed as mainly N-methyl carbamoyl ethyl acrylate (MCEA) together with a small amount of the diurethane obtainable by the reaction of two moles of isophorone diisocyanate with a mole of hydroxyethyl acrylate.

The water resistance, u.v. resistance, viscosity and reactivity of this composition were found to be substantially the same as those for Composition T but the bond strength was increased at about 2100 g/cm.

Glass/pvc/glass laminates were prepared from the composition and subjected to the "falling ball" test described in Example 5.

The average number of strikes required before the ball passed completely through the laminate was 7—8 and in some samples the number of strikes exceeded 10, reflecting very high impact resistance.

It was also observed that when the glass shattered, the fragments and splinters largely remained firmly adhered to the interlayer and little, if any, glass separated.

When the test was repeated with the laminate heated to 40°C, the average number of strikes required was about 5—6.

Similar results were obtained in two further tests when the amount of additive was altered from 2 parts to 5 parts and 10 parts, respectively.

By way of comparison, the same test was also applied to samples of commercially available laminated glass and the results are tabulated below.

| | Type of laminated glass | Average number of strikes required before ball passed completely through laminate |
|---|---|---|
| A. | 4 mm glass/0.76 mm interlayer/ 4 mm glass, sold commercially as "KINON" | 5 |
| B. | 4 mm glass/0.76 mm interlayer/ 4 mm glass, sold commercially as "SIV" | 4 |

In both the above cases, when the test was repeated at 45—50°C, the ball passed through the laminate on the first drop because of the loss of strength of the polyvinyl butyral interlayer at this temperature.

Example 7

Results similar to those obtained in Example 6 were obtained when the Actomer X-117 was replaced with corresponding amounts of Actomer X-118 and of Genomer T-1600.

Actomer X-118 is described as a urethane acrylate oligomer material solution in a mixture of acrylate monomers of which the major part has a low molecular weight urethane structure. Its theoretical molecular weight is reported as 2122 and its theoretical functionality (i.e. number of αβ-ethylenically unsaturated groups per molecule) as 2.2. Analysis showed the oligomeric component to contain residues of caprolactone-derived polyol, isophorone diisocyanate, ethylene glycol and acrylic acid, to have an $M_N$ of about 5350 and to consist largely of oligomer having 3 or more αβ-ethylenically unsaturated groups per molecule. The low molecular weight material was found to comprise largely MCEA.

Genomer T-1600, which is available from Rahn of Switzerland, is a urethane acrylate having approximately three αβ-ethylenically unsaturated groups per molecule and a molecular weight $M_N$ of about 1600. Analysis showed it to contain residues of polycaprolactone polyol as well as acrylic acid and isocyanate.

Examples 8 and 9

The following Examples illustrate the inclusion of a polyester containing terminal unsaturation in the oligomeric component.

| Example | 8 | 9 |
|---|---|---|
| Ebecryl 230 | 50 | 50 |
| Polyester | 30 | 30 |
| AA | 13 | 13 |
| n-Bu A | 0 | 5 |
| HEA | 5 | 0 |
| Benzophenone | 2 | 2 |
| Water resistance | 3 | 3 |
| Adhesion (g/cm) | 320 | 180 |

AA is acrylic acid
n-Bu A is n-butyl acrylate
HEA is hydroxyethyl acrylate.

The polyester employed was a polyester acrylate having a molecular weight $M_N$ of about 1000 and a functionality of 4 and is available as Ebecryl 810 from UCB, Belgium.

In further experiments there was used, instead of the unsaturated polyester resin, Epikote 834 of Shell Chemicals which is a saturated epoxy resin derived from bisphenol-A and epichlorhydrin.

Examples 10—16

Example 6 was repeated but with varying proportions of acrylic acid and n-butyl acrylate. The full results are set out below. In Example 10, in which no acrylate is present, the water resistance is inadequate. In Example 16, in which no acrylic acid is present, the bond strength is too low to measure.

| Example | 10 (Comparative) | 11 | 12 | 13 | 14 | 15 (comparative) | 16 (comparative) |
|---|---|---|---|---|---|---|---|
| Acrylic Acid (parts) | 38.5 | 33 | 27.5 | 18.5 | 14 | 9.5 | 0 |
| n-Butyl Acrylate (parts) | 0 | 5.5 | 11.0 | 20 | 24.5 | 29.0 | 38.5 |
| Water Resistance | <2 | 3.5 | 4.5—5 | 4.5—5 | 4 | 2.5 | n.m. |
| Cure Time (secs) | 30 | n.m. | n.m. | 40—50 | n.m. | 40—50 | n.m. |
| Bond Strength (g/cm) | 1300 | 1600 | 2400 | 2000 | 600 | 400 | negligible |

n.m. means "not measured"

Comments on the performance in the Peel Test of bonds formed using the above compositions:

Example 10: Difficult to record bond strength because measurements vary substantially from test to test and during each test. Bond strength drops sharply if parting is rapid.

Example 11: Similar to 10.

Example 12: Similar to 10.

Example 13: Parting force fairly uniform at parting rate of 30 $cm^{-1}$ sec. Some drop in bond strength if parted by sharp manual movement.

Example 14: Parting force constant at 30 cm $sec^{-1}$ and no drop in bond strength if parted sharply.

Example 15: As 14 but bond strength barely adequate.

Example 17

A composition was prepared from 55.3 parts of Ebecryl 230, 4.9 parts of Actomer X-117, 28.1 parts acrylic acid, 9.2 parts ethyl acrylate and 2.5 parts benzophenone. It was found to have a bond strength of >2000 g/cm and a water resistance of 2.

Example 18

The composition of Example 17 was modified by replacing the ethyl acrylate by an equal amount of n-butyl acrylate. The resultant composition was found to have a bond strength of >2200 g/cm, a bond dryness of C, a water resistance of about 5.5—6, a u.v. resistance of 0 and a cure time of about 25 seconds.

Examples 19—27

Varying amounts of the combination of acrylic acid and n-butyl acrylate of the composition of Example 18 were replaced by pro rata amounts of a multiacrylate with the results shown below. In each case, each 4 parts of multiacrylate replaced 3 parts of the acrylic acid 1 part of the n-butyl acrylate, so that the ratio of acrylic acid:n-butyl acrylate remained substantially constant.

| Example No. | 19 | 20 | 21 | 22 | 23 |
|---|---|---|---|---|---|
| Nature of multiacrylate | NPGDA* | NPGDA | NPGDA | PETA* | PETA |
| Proportion of multiacrylate in diluent | 10% | 20% | 40% | 10% | 20% |
| Bond strength (g/cm) | 2150 | 1650 | 850 | 1650 | 1300 |

*NPGDA is neopentylglycol diacrylate
*PETA is pentaerythritol triacrylate

| Example No. | 24 | 25 | 26 | 27 |
|---|---|---|---|---|
| Nature of multiacrylate | PETA | PETEA* | PETEA | PETEA |
| Proportion of multiacrylate in diluent | 40% | 10% | 20% | 30% |
| Bond strength (g/cm) | 450 | 2000 | 1200 | 700 |

*PETEA is pentaerythritol tetra acrylate

Example 28

The composition of Example 18 was modified by the inclusion of 5 parts of a balsamic resin sold as Abitol by Hercules NV of Netherlands. A sample of the formulation was then employed to fill the space between two 3 mm thick glass sheets spaced 0.75 mm apart and cured and the resultant laminate was exposed to the light of a 1 Kw high pressure mercury lamp. After 186 hours continuous exposure, the cured composition was still water-white. When the experiment was repeated using the formulation of Example 18, the cured composition turned a very pale straw colour after 186 hours exposure.

Examples 29 and 30

Example 28 was repeated but using 2.5 parts of balsamic resin (Example 29) and 10 parts of balsamic resin (Example 30). An improvement in aging was observed in Example 29 but the results were not quite as good as Example 28. In Example 30, the improvement over Example 28 was barely perceptible.

Examples 31 and 32

Example 28 was repeated but replacing the Abitol with corresponding amounts of other balsamic resins, namely Staybelite Ester 3 (Example 31) and Hercolyn (Example 32), with the same results.

Examples 33 to 37

Example 28 was repeated but with the basic formulation of Example 18 replaced by other urethane acrylate-based formulations identified in the Table below which also reports the results obtained.

| Example | Basic formulation | Ageing result (colour) | |
|---|---|---|---|
| | | Without Abitol | With 5% Abitol |
| 33 | Loctite 357 adhesive | Yellow-brown | Less dark |
| 34 | Loctite 580 adhesive | Straw yellow | Pale straw yellow |
| 35 | Loctite 358 adhesive | Straw yellow | Pale straw yellow |
| 36 | As Example 18 but with the Ebecryl 230 replaced by Ebecryl 220 | Yellow | Pale yellow |
| 37 | As Example 18 but with the Ebecryl 230 replaced by Ebecryl 210 | Yellow | Straw yellow |

Example 38

Example 28 was repeated but replacing the benzophenone with an equal weight of Darocure. Without the balsamic resin, the cured composition turned pale yellow-brown. With the balsamic resin, the end colour was a paler yellow brown.

One or more of the following trade names may be Registered Trade Marks in one or more of the contracting states of the European Patent Convention, namely "Abitol", "Staybelite", "Vibak", "Hanau", "Ebecryl", "Actomer", "Kinon", "SIV", "Genomer", "Epikote" and "Darocure".

**Claims**

1. A radiation-curable fluid adhesive composition for the production of clear glass laminate and of the kind comprising (a) a urethane acrylate component in (b) a liquid αβ-ethylenically unsaturated diluent component comprising acrylic acid and a monoester of acrylic acid, said composition also optionally containing (c) a photoinitiator, characterised in that said urethane acrylate component comprises at least one urethane acrylate of the kind obtainable by reaction of an oligomeric urethane intermediate having end groups selected from —OH and —NCO with an αβ-ethylenically unsaturated compound which has a group reactive with an end group of the intermediate and also a carboxy (—COO) group attached to a carbon atom which is attached to a methylene group by a double bond, said urethane acrylate component is formed at least mainly of material having a molecular weight ($M_N$) above 1500, and said urethane acrylate component forms from 45% to 75% by weight of the composition, and said diluent component comprises (i) acrylic acid, (ii) an effective amount of at least one acrylate selected from monoesters of acrylic acid and alkanols having from 1 to 6 carbon atoms and substituted derivatives of such alkanols, wherein each substituent contains only carbon, hydrogen and oxygen atoms, and, optionally, (iii) a multiacrylate; said component (i) being present in an amount of from 35% to 90% by weight, based on the total weight of components (i) and (ii), said component (ii) being present in an amount of from 10% to 65% by weight, based on the total weight of components (i) and (ii), and said component (iii) forming from 0% to about 40% by weight of the diluent.

2. A composition as claimed in claim 1 wherein said at least one acrylate is selected from monoesters of acrylic acid with alcohols having the structure

$$R—C(R')_2—C(R')_2—OH$$

wherein R is —H, —OH or a monovalent organic group containing atoms selected only from carbon, oxygen and hydrogen, and having not more than 4 atoms in a chain attached to the free valency, and each R' is individually selected from —H and —$CH_3$, or R and R' together may form a divalent group containing atoms selected only from carbon, hydrogen and oxygen, the sum of the carbon and oxygen atoms in said alcohol being from 4 to 7.

3. A composition as claimed in claim 1 in which the acrylate is n-butyl acrylate.

4. A composition according to any one of claims 1 to 3 wherein the acrylate component is present in an amount of at least 25%, preferably at least 35%, by weight, based on the combined weight of acrylate and acrylic acid.

5. A composition as claimed in claim 4 in which the acrylate is present in an amount of from 40% to 60%, by weight, based on the combined weight of acrylate and acrylic acid.

6. A composition according to any one of claims 1 to 5 wherein the urethane acrylate component forms from 50% to 70% by weight of the composition.

7. A composition according to any one of claims 1 to 6 wherein the urethane acrylate component is

derived from polyisocyanate at least most of the isocyanate groups of which are attached to aliphatic carbon atoms.

8. A composition as claimed in any one of claims 1 to 7 in which the urethane acrylate component is derived from polyol which is at least mainly polyether polyol.

9. A composition according to any one of claims 1 to 8 wherein the urethane acrylate oligomer component comprises a mixture of (a) generally difunctional urethane acrylate material and (b) urethane acrylate which has a functionality of at least 3 and a molecular weight $M_N$ of at least 1300.

10. A composition according to claim 9 in which the generally difunctional urethane acrylate material is present in the mixture in a major amount and the urethane acrylate having a functionality of at least 3 is preferably present in an amount of 0.5 to 30% by weight of the mixture.

11. A composition as claimed in claim 9 or claim 10 in which component (a) comprises urethane acrylate oligomer containing about 2 αβ-ethylenically unsaturated groups per molecule, and is derived from polyol which is at least mainly polyether polyol and is at least substantially free of ester groups.

12. A composition as claimed in claim 9, 10 or 11 in which component (b) is derived from polyol which is at least mainly polyester polyol.

13. A composition as claimed in claim 12 in which component (b) is derived from polyol which is derived from lactone, preferably caprolactone.

14. A composition as claimed in any one of claims 1 to 13 wherein all or substantially all of the unsaturation in the urethane acrylate component is terminal αβ-unsaturation.

15. A composition as claimed in any one of claims 1 to 14 which includes at least one further resinous material preferably selected from epoxy resins and balsamic resins and preferably in an amount not exceeding 50% by weight of the composition.

16. A radiation-curable urethane acrylate composition as claimed in claim 15 in which said further resinous material is balsamic resin which is employed in an age-improving amount of from 0.5 to 50% by weight of the composition.

17. A composition as claimed in claim 16 in which said balsamic resin is present in an amount of up to 10% by weight of the composition.

18. A composition as claimed in any one of claims 1 to 17 having a viscosity of 0.3 to 1.2 Pa · s (300 to 1200 cp) as measured at 20°C on a Brookfield LV viscometer using a No. 1 spindle at 6 rpm, a bond strength in the cured state of at least about 300 g/cm and a bond "dryness" of C as herein defined.

19. A composition as claimed in any one of claims 1 to 18 having a bond strength as herein defined of at least 500 g/cm.

20. A u.v.-radiation curable adhesive composition as claimed in any one of claims 1 to 17 and having a viscosity of 1.2 Pa · s (1200 cp) or less, measured using a Brookfield LV viscometer with a No. 1 spindle at 6 rpm at 20°C, and a cure time, as herein defined, of 30 seconds or less, and which cures to a clear and colourless adhesive layer having a bond strength of at least 500 g/cm, a water-resistance of at least 4 and u.v.-resistance of 0, where bond strength, water-resistance and u.v.-resistance are all as defined herein.

21. A method of producing a clear glass laminate which involves bonding a first sheet of glass to a second sheet which is selected from glass sheets and clear plastics sheets using an adhesive, wherein as adhesive there is used a composition as claimed in any one of the preceding claims and the assembly of sheets with a layer of the adhesive composition therebetween is exposed to irradiation to cure the adhesive and bond the sheets together.

22. A method of producing a clear glass laminate in which one face of a clear plastics foil or film interlayer is bonded to a glass sheet and the other face is bonded to a second sheet which is selected from glass sheets and clear plastics sheets, wherein the bonding of at least said glass sheet to said interlayer is effected by means of an adhesive composition as claimed in any one of claims 1 to 20 and the assembly of glass sheet and interlayer with a layer of the adhesive composition therebetween is exposed to irradiation to cure the adhesive and bond the sheet and interlayer together.

23. A laminate comprising a first sheet of glass bonded to a second sheet which is selected from glass sheets and clear plastics sheets by means of a layer of a composition as claimed in any one of claims 1 to 20 which has been cured by irradiation.

24. A laminate comprising a clear plastics foil or film interlayer one face of which is bonded to a glass sheet and the other face of which is bonded to a second sheet selected from glass sheets and clear plastics sheets and wherein at least the bond between the interlayer and the glass sheet is by means of a layer of a composition as claimed in any one of claims 1 to 20 which has been cured by irradiation.

**Patentansprüche**

1. Strahlungshärtbare flüssige Kleberzusammensetzung zur Herstellung von klaren Glaslaminaten, enthaltend (a) eine Urethan-Acrylat-Komponente in (b) einer flüssigen α,β-ethylenisch ungesättigten Verdünner-Komponente, die Acrylsäure und einen Monoester von Acrylsäure umfaßt, wobei die Zusammensetzung gegebenenfalls auch (c) einen Photoinitiator enthält, dadurch gekennzeichnet, daß die Urethan-Acrylat-Komponente mindestens ein Urethan-Acrylat der Art enthält, das erhältlich ist durch Umsetzung eines oligomeren Urethan-Zwischenproduktes mit Endgruppen, ausgewählt aus —OH und —NCO, mit einer α,β-ethylenisch ungesättigten Verbindung, die eine Gruppe aufweist, die mit einer

Endgruppe des Zwischenproduktes reaktiv ist, und auch eine an ein Kohlenstoffatom, das an eine Methylengruppe durch eine Doppelbindung gebunden ist, gebundene Carboxy(—COO)-Gruppe, wobei die Urethan-Acrylat-Komponente zumindest vorwiegend aus einem Material mit einem Molekulargewicht ($M_N$) von über 1500 gebildet wird, und die Urethan-Acrylat-Komponente 45 bis 75 Gew.-% der Zusammensetzung bildet, und die Verdünner-Komponente (i) Acrylsäure, (ii) eine wirksame Menge von mindestens einem Acrylat, ausgewählt aus Monoestern von Acrylsäure und Alkanolen mit 1 bis 6 Kohlenstoffatomen und substituierten Derivaten solcher Alkanole, worin jeder Substituent nur Kohlenstoff-, Wasserstoff- und Sauerstoffatome enthält, umfaßt, und gegebenenfalls (iii) ein Multiacrylat; und wobei die Komponente (i) in einer Menge von 35 bis 90 Gew.-%, bezogen auf das Gesamtgewicht der Komponenten (i) und (ii), vorhanden ist, die Komponente (ii) in einer Menge von 10 bis 65 Gew.-%, bezogen auf das Gesamtgewicht der Komponenten (i) und (ii), vorhanden ist, und die Komponente (iii) 0 bis 40 Gew.-% des Verdünners bildet.

2. Zusammensetzung nach Anspruch 1, dadurch gekennzeichnet, daß mindestens ein Acrylat ausgewählt ist aus Monoestern von Acrylsäure mit Alkoholen mit der Struktur

$$R—C(R')_2—C(R')_2—OH$$

worin R, —H, —OH oder eine einwertige organische Gruppe, die Atome enthält, die nur ausgewählt sind aus Kohlenstoff, Sauerstoff und Wasserstoff, und nicht mehr als 4 Atome in einer an die freie Valenz gebundenen Kette besitzt, ist, und jedes R' unabhängig ausgewählt ist aus —H und —$CH_3$, oder R und R' zusammen ein zweiwertige Gruppe bilden können, die Atome enthält, die nur aus Kohlenstoff, Wasserstoff und Sauerstoff ausgewählt sind, und die Summe der Kohlenstoff- und Sauerstoffatome in diesem Alkohol 4 bis 7 beträgt.

3. Zusammensetzung nach Anspruch 1, dadurch gekennzeichnet, daß das Acrylat n-Butyl-acrylat ist.

4. Zusammensetzung nach einem der Ansprüche 1 bis 3, dadurch gekennzeichnet, daß die Acrylat-Komponente in einer Menge von mindestens 25 Gew.-%, vorzugsweise mindestens 35 Gew.-%, bezogen auf das kombinierte Gewicht von Acrylat und Acrylsäure, vorhanden ist.

5. Zusammensetzung nach Anspruch 4, dadurch gekennzeichnet, daß das Acrylat in einer Menge von 40 bis 60 Gew.-%, bezogen auf das kombinierte Gewicht von Acrylat und Acrylsäure, vorhanden ist.

6. Zusammensetzung nach einem der Anspruch 1 bis 5, dadurch gekennzeichnet, daß die Urethan-Acrylat-Komponente 50 bis 70 Gew.-% der Zusammensetzung bildet.

7. Zusammensetzung nach einem der Ansprüche 1 bis 6, dadurch gekennzeichnet, daß die Urethan-Acrylat-Komponente abgeleitet ist von Polyisocyanat, wobei mindestens die meisten der Isocyanatgruppen davon an aliphatische Kohlenstoffatome gebunden sind.

8. Zusammensetzung nach einem der Ansprüche 1 bis 7, dadurch gekennzeichnet, daß die Urethan-Acrylat-Komponente von Polyol abgeleitet ist, das mindestens vorwiegend Polyether-Polyol ist.

9. Zusammensetzung nach einem der Ansprüche 1 bis 8, dadurch gekennzeichnet, daß die Urethan-Acrylat-Oligomer-Komponente eine Mischung aus (a) einem im allgemeinen difunktionellen Urethan-Acrylat-Material und (b) einem Urethan-Acrylat, das eine Funktionalität von mindestens 3 und ein Molekulargewicht $M_N$ von mindestens 1300 besitzt, umfaßt.

10. Zusammensetzung nach Anspruch 9, dadurch gekennzeichnet, daß das im allgemeinen difunktionelle Urethan-Acrylat-Material in der Mischung in einer überwiegenden Menge vorhanden ist, und das Urethan-Acrylat mit einer Funktionalität von mindestens 3 vorzugsweise in einer Menge von 0,5 bis 30 Gew.-% der Mischung vorhanden ist.

11. Zusammensetzung nach Anspruch 9 oder 10, dadurch gekennzeichnet, daß die Komponente (a) ein Urethan-Acrylat-Oligomer umfaßt, das ca. 2 $\alpha,\beta$-ethylenisch ungesättigte Gruppen pro Molekül enthält, und von einem Polyol abgeleitet ist, das mindestens vorwiegend Polyether-Polyol ist, und mindestens im wesentlichen frei ist von Estergruppen.

12. Zusammensetzung nach Anspruch 9, 10 oder 11, dadurch gekennzeichnet, daß die Komponente (b) abgeleitet ist von einem Polyol, das mindestens vorwiegend Polyester-Polyol ist.

13. Zusammensetzung nach Anspruch 12, dadurch gekennzeichnet, daß die Komponente (b) abgeleitet ist von einem Polyol, das sich von Lacton, vorzugsweise Caprolacton, ableitet.

14. Zusammensetzung nach einem der Ansprüche 1 bis 13, dadurch gekennzeichnet, daß die gesamte oder im wesentlichen gesamte Ungesättigtheit in der Urethan-Acrylat-Komponente eine terminale $\alpha,\beta$-Ungesättigtheit ist.

15. Zusammensetzung nach einem der Ansprüche 1 bis 14, dadurch gekennzeichnet, daß sie mindestens ein weiteres Harzmaterial enthält, das vorzugsweise ausgewählt ist aus Epoxyharzen und Balsamharzen, und vorzugsweise in einer Menge, die 50 Gew.-% der Zusammensetzung nicht übersteigt.

16. Strahlungshärtbare Urethan-Acrylat-Zusammensetzung nach Anspruch 15, dadurch gekennzeichnet, daß das weitere Harzmaterial Balsamharz ist, das in einer die Alterung verbessernden Menge von 0,5 bis 50 Gew.-% der Zusammensetzung verwendet wird.

17. Zusammensetzung nach Anspruch 16, dadurch gekennzeichnet, daß das Balsamharz in einer Menge von bis zu 10 Gew.-% der Zusammensetzung vorhanden ist.

18. Zusammensetzung nach einem de Ansprüche 1 bis 17, dadurch gekennzeichnet, daß sie eine Viskosität besitzt von 0,3 bis 1,2 Pa · s (300 bis 1200 cp), gemessen bei 20°C in einem Brookfield LV

Viskosimeter unter Verwendung einer Nr. 1-Spindel bei 6 Upm, eine Verbundfestigkeit im ausgehärteten Zustand von mindestens ca. 300 g/cm besitzt, und eine Bindungs-"driness" von C, wie hierin definiert.

19. Zusammensetzung nach einem der Ansprüche 1 bis 18, dadurch gekennzeichnet, daß sie eine Verbundfestigkeit, wie hierin definiert, von mindestens 500 g/cm besitzt.

20. Eine durch UV-Strahlung härtbare Kleberzusammensetzung nach einem der Ansprüche 1 bis 17, dadurch gekennzeichnet, daß sie besitzt: eine Viskosität von 1,2 Pa · s (1200 cp) oder weniger, gemessen unter Verwendung eines Brookfield LV Viskosimeters mit einer Nr. 1-Spindel bei 6 Upm und 20°C, und eine Härtungszeit, wie hierin definiert, von 30 sec. oder weniger, und die zu einer klaren und farblosen Klebeschicht aushärtet, die eine Verbundfestigkeit von mindestens 500 g/cm, eine Wasserbeständigkeit von mindestens 4, und eine UV-Beständigkeit von 0 besitzt, wobei Verbundfestigkeit, Wasserbeständigkeit und UV-Beständigkeit wie hierin definiert sind.

21. Verfahren zur Herstellung eines klaren Glaslaminats durch Kleben einer ersten Schicht aus Glas an eine zweite Schicht, die ausgewählt ist aus Glasplatten oder klaren Kunststoffplatten, unter Verwendung eines Klebers, dadurch gekennzeichnet, daß als Kleber eine Zusammensetzung nach einem der vorhergehenden Ansprüche verwendet wird, und die Anordnung der Platten mit einer dazwischenliegenden Schicht der Kleberzusammensetzung einer Strahlung ausgesetzt wird, um den Kleber zu härten und die Platten aneinanderzubinden.

22. Verfahren zur Herstellung eines klaren Glaslaminats, bei dem eine Fläche einer Zwischenschicht aus einer klaren Kunststoff-Folie oder -Film an eine Glasplatte gebunden wird, und die andere Fläche an eine zweite Platte gebunden wird, die ausgewählt ist aus Glasplatten und klaren Kunststoff-Platten, dadurch gekennzeichnet, daß die Bindung von mindestens der Glasplatte an die Zwischenschicht mittels einer Kleberzusammensetzung nach einem der Ansprüche 1 bis 20 bewirkt wird und die Anordnung aus Glasplatte und Zwischenschicht mit einer dazwischenliegenden Schicht der Kleberzusammensetzung einer Strahlung ausgesetzt wird, um den Kleber zu härten und die Platte und Zwischenschicht zusammenzubinden.

23. Laminat mit einer ersten Platte aus Glas, die mittels einer Schicht einer Zusammensetzung nach einem der Ansprüche 1 bis 20, die durch Strahlung gehärtet wurde, an eine zweite Platte gebunden ist, die ausgewählt ist aus Glasplatten und klaren Kunststoffplatten.

24. Laminat mit einer Zwischenschicht aus einer klaren Kunststoff-Folie oder -Film, deren eine Fläche an eine Glasplatte gebunden ist, und deren andere Fläche an eine zweite Platte gebunden ist, die ausgewählt ist aus Glasplatten und klaren Kunststoff-Platten, und worin mindestens die Bindung zwischen der Zwischenschicht und der Glasplatte mittels einer Schicht einer Zusammensetzung nach einem der Ansprüche 1 bis 20, die durch Strahlung gehärtet wurde, bewirkt wird.

**Revendications**

1. Composition adhésive fluide réticulable par irradiation pour la production de feuilleté de verre clair et de la sorte comprenant (a) un composant uréthane acrylate dans (b) un composant diluant liquide insaturé α,β-éthyléniquement comprenant de l'acide acrylique et un monoester d'acide acrylique, cette composition contenant aussi éventuellement (c) un photo-initiateur, caractérisée en ce que ce composant uréthane acrylate comprend au moins un uréthane acrylate de la sorte pouvant être obtenu par réaction d'un intermédiaire uréthane oligomère ayant des groupes terminaux choisis parmi —OH et —NCO avec un composé insaturé α,β-éthyléniquement qui a un groupe pouvant réagir avec un groupe terminal de l'intermédiaire et aussi un groupe carboxy (—COO) attaché à un atome de carbone qui est fixé à un groupe méthylène par une double liaison, ce composant uréthane acrylate est formé au moins principalement de matière ayant un poids moléculaire ($M_N$) supérieur à 1500, et ce composant uréthane acrylate forme de 45% à 75% en poids de la composition et ce composant diluant comprend (i) de l'acide acrylique, (ii) une quantité efficace d'au moins un acrylate choisi parmi des monoesters d'acide acrylique et des alcanols ayant 1 à 6 atomes de carbone et des dérivés substitués de ces alcanols dans lesquels chaque substituant ne contient que des atomes de carbone, d'hydrogène et d'oxygène, et éventuellement, (iii) un multiacrylate; ce composant (i) étant présent en une quantité de 35% à 90% en poids par rapport au poids total des composants (i) et (ii), ce composant (ii) étant présent en une quantité de 10% à 65% en poids par rapport au poids total des composants (i) et (ii), et ce composant (iii) formant de 0% à 40% environ en poids du diluant.

2. Composition suivant la Revendication 1, dans laquelle au moins un acrylate est choisi parmi des monoesters d'acide acrylique avec des alcools avant la structure

$$R—C(R')_2—C(R')_2—OH$$

dans laquelle R est —H, —OH ou un groupe organique monovalent contenant des atomes choisis uniquement parmi des atomes de carbone, d'oxygène et d'hydrogène et n'ayant pas plus de 4 atomes dans une chaîne attachée à la valence libre, et où chaque R' est choisi individuellement parmi —H et —$CH_3$, ou R et R' peuvent former ensemble un groupe divalent contenant des atomes choisis uniquement parmi des atomes de carbone, d'hydrogène et d'oxygène, la somme des atomes de carbone et d'oxygène dans cet alcool étant de 4 à 7.

3. Composition suivant la Revendication 1, dans laquelle l'acrylate est l'acrylate de n-butyle.

4. Composition suivant l'une quelconque des Revendications 1 à 3, dans laquelle le composant acrylate est présent en une quantité d'au moins 25%, de préférence d'au moins 35% en poids par rapport au poids combiné d'acrylate et d'acide acrylique.

5. Composition suivant la Revendication 4, dans laquelle l'acrylate est présent en une quantité de 40% à 60% en poids, par rapport au poids combiné d'acrylate et d'acide acrylique.

6. Composition suivant l'une quelconque des Revendications 1 à 5, dans laquelle le composant uréthane acrylate forme de 50% à 70% en poids de la composition.

7. Composition suivant l'une quelconque des Revendications 1 à 6, dans laquelle le composant uréthane acrylate est dérivé d'un polyisocyanate dont au moins la plupart des groupes isocyanates sont attachés à des atomes de carbone aliphatique.

8. Composition suivant l'une quelconque des Revendications 1 à 7, dans laquelle le composant uréthane acrylate est dérivé d'un polyol qui est au moins principalement un polyéther polyol.

9. Composition suivant l'une quelconque des Revendications 1 à 8, dans laquelle le composant oligomère d'uréthane acrylate comprend un mélange de (a) une matière uréthane acrylate généralement difonctionnelle et (b) un uréthane acrylate qui a une fonctionalité d'au moins 3 et un poids moléculaire $M_N$ d'au moins 1300.

10. Composition suivant la Revendication 9 dans laquelle la matière uréthane acrylate généralement difonctionnelle est présente dans le mélange en une quantité majeure et l'uréthane acrylate ayant une fonctionalité d'au moins 3 est de préférence présent en une quantité de 0,5 à 30% en poids du mélange.

11. Composition suivant la Revendication 9 ou 10, dans laquelle le composant (a) comprend un oligomère d'uréthane acrylate contenant environ 2 groupes insaturés α,β-éthyléniquement par molécule, et est dérivé d'un polyol qui est au moins principalement un polyéther polyol et est au moins pratiquement dépourvu de groupe ester.

12. Composition suivant la Revendication 9, 10 ou 11, dans laquelle le composant (b) est dérivé d'un polyol qui est au moins principalement un polyester polyol.

13. Composition suivant la Revendication 12, dans laquelle le composant (b) est dérivé d'un polyol qui est dérivé d'une lactome, de préférence la caprolactome.

14. Composition suivant l'une quelconque des Revendications 1 à 13 dans laquelle toute ou pratiquement toute l'insaturation dans le composant uréthane acrylate est une insaturation α,β terminale.

15. Composition suivant l'une quelconque des Revendications 1 à 14, qui comprend au moins une autre matière résineuse choisie de préférence parmi des résines époxy et des résines balsamiques et de préférence en une quantité ne dépassant pas 50% en poids de la composition.

16. Composition d'uréthane acrylate réticulable par irradiation suivant la Revendication 15, dans laquelle cette autre matière résineuse est une résine balsamique qui est employée en une quantité améliorant le vieillissement de 0,5 à 50% en poids de la composition.

17. Composition suivant la Revendication 16, dans laquelle cette résine balsamique est présente en une quantité allant jusqu'à 10% en poids de la composition.

18. Composition suivant l'une quelconque des Revendications 1 à 17, ayant une viscosité de 0,3 à 1,2 Pa · s (300 à 1200 cp) mesurée à 20°C sur un viscosimètre Brookfield LV avec une broche n° 1 à 6 tpm, une résistance de la liaison à l'étant réticulé d'au moins environ 300 g/cm et une "sécheresse" de la liaison de C telle que définie ici.

19. Composition suivant l'une quelconque des Revendications 1 à 18, ayant une résistance de la liaison telle que définie ici d'au moins 500 g/cm.

20. Composition adhésive réticulable par irradiation U.V. suivant l'une quelconque des Revendications 1 à 17 et ayant une viscosité de 1,2 Pa · s (1200 cp) ou moins, mesurée sur un viscosimètre Brookfield LV avec une broche n° 1 à 6 tpm à 20°C et une durée de réticulation, telle que définie ici, de 30 secondes ou moins, et qui durcit en une couche adhésive incolore et claire ayant une resistance de la liaison d'au moins 500 g/cm, une résistance à l'eau d'au moins 4 et une résistance aux U.V. de 0, la résistance de la liaison, la résistance à l'eau et la résistance aux U.V. étant toutes telles que définies ici.

21. Procédé de production d'un feuilleté de verre clair qui implique la liaison d'une première feuille de verre sur une seconde feuille qui est choisie parmi des feuilles de verre et des feuilles de matière plastique claire avec un adhésif, dans lequel on utilise comme adhésif une composition suivant l'une quelconque des revendications précédentes et l'on expose: à une irradiation l'assemblage de feuilles entre lesquelles est placée la composition adhésive pour réticuler l'adhésif et lier ensemble les feuilles.

22. Procédé de production d'un feuilleté de verre clair dans lequel une face d'une intercouche de film ou de feuille plastique claire est liée à une feuille de verre et l'autre face est liée à une seconde feuille qui est choisie parmi des feuilles de verre et des feuilles de matière plastique claire, dans lequel la liaison d'au moins cette feuille de verre à cette intercouche est effectuée au moyen d'une composition adhésive suivant l'une quelconque des Revendications 1 à 20 et l'assemblage de la feuille de verre et de l'intercouche entre lesquelles est placée la composition adhésive est exposée à une irradiation pour réticuler l'adhésif et lier ensemble la feuille et l'intercouche.

23. Feuilleté comprenant une première couche de verre liée à une seconde feuille qui est choisie parmi des feuilles de verre et des feuilles de matière plastique claire au moyen d'une couche d'une composition suivant l'une quelconque des Revendications 1 à 20, qui a été réticulée par irradiation.

24. Feuilleté comprenant une intercouche de film ou de feuille plastique claire dont une face est reliée à une feuille de verre et l'autre est reliée à une seconde feuille choisie parmi des feuilles de verre et des feuilles de matière plastique claire et dans lequel au moins la liaison entre l'intercouche et la feuille de verre est réalisée au moyen d'une couche d'une composition suivant l'une quelconque des Revendications 1 à 20, qui a été réticulée par irradiation.